# EUROPEAN PATENT APPLICATION

(11) **EP 4 563 473 A1**
(43) Date of publication of application: **04.06.2025**
(21) Application number: 24216100.8
(22) Date of filing: 28.11.2024
(51) Int. Cl.: B64D 13/06

(54) **TURBO CABIN AIR COMPRESSOR SURGE RELIEF ENERGY RECOVERY**

(30) Priority: 01.12.2023 US 202318526503
(71) Applicant: Hamilton Sundstrand Corporation, Charlotte, NC 28217-4578 (US)
(72) Inventor: VIGNALI, Mark, Simsbury, 06070 (US); KLINE, Erin G., Vernon, 06066 (US); ERNST, Jeffrey, Wethersfield, 06109 (US)
(74) Representative: Dehns

(57) **Abstract**

An aircraft air supply system for generating pressurized air includes a compressor (114, 214) configured to receive and pressurize a flow of outside air, a turbine (118, 218) operatively coupled to the compressor (114, 214) by a shaft and configured to drive the compressor (114, 214), a fluid pathway fluidly connecting the compressor (114, 214) to an environmental control system pack, an outflow pathway fluidly connecting a cabin of the aircraft to the turbine (118, 218), a surge relief pathway fluidly connecting the compressor (114, 214) to the outflow pathway and the turbine (118, 218), and a surge relief valve disposed within the surge relief pathway. In a first operational state, the surge relief valve is open to allow a flow of surge relief air to flow from the compressor (114, 214) to the outflow pathway via the surge relief pathway, the surge relief air further flowing through the turbine (118, 218).

## Description

### BACKGROUND

The present invention relates to aircraft environmental control systems and, more particularly, to an air supply of an aircraft environmental control system.

An aircraft environmental control system provides conditioned air to the aircraft. In many such systems, outside air can be pressurized by a compressor and provided to the aircraft cabin and other systems, while a turbine recovers energy from cabin outflow air at high altitudes. The pressure of the ambient air varies based on the altitude of the aircraft, thereby varying the efficiency and performance of the compressor and/or turbine. Accordingly, means for improving efficiency of these components are desirable.

### SUMMARY

An aircraft air supply system for generating pressurized air includes a compressor configured to receive and pressurize a flow of outside air, a turbine operatively coupled to the compressor by a shaft and configured to drive the compressor, a fluid pathway fluidly connecting the compressor to an environmental control system pack, an outflow pathway fluidly connecting a cabin of the aircraft to the turbine, a surge relief pathway fluidly connecting the compressor to the outflow pathway and the turbine, and a surge relief valve disposed within the surge relief pathway. In a first operational state, the surge relief valve is open to allow a flow of surge relief air to flow from the compressor to the outflow pathway via the surge relief pathway, the surge relief air further flowing through the turbine.

A method of operating an aircraft air supply system in a first operating mode includes pressurizing, using a compressor, a flow of outside air, evacuating an amount of the pressurized air from the compressor as surge relief air via a surge relief pathway to prevent surging of the compressor, the surge relief pathway fluidly connected to an outflow pathway and a turbine of the air supply system, depressurizing, using the turbine, the surge relief air, and powering, using the turbine, the compressor using energy recovered from depressurizing the surge relief air.

A method of operating an aircraft air supply system in a second operating mode includes providing outflow air from a cabin of the aircraft to a turbine, depressurizing, using the turbine, the outflow air to cool the outflow air, and placing the cooled outflow air in thermal communication with a relatively hotter medium of an aircraft system to cool the relatively hotter medium.

### BRIEF DESCRIPTION OF THE DRAWINGS

FIG. 1 is a schematic diagram of a first embodiment of an aircraft environmental control system.
FIG. 2 is a schematic diagram of a second embodiment of an aircraft environmental control system.
FIG. 3 is a schematic diagram of a third embodiment of an aircraft environmental control system.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents various embodiments of an aircraft air supply system configured to reduce aircraft energy expenditure by repurposing otherwise unused airflows. Although discussed with respect to aircraft, the systems described herein can be used in other types of vehicles.

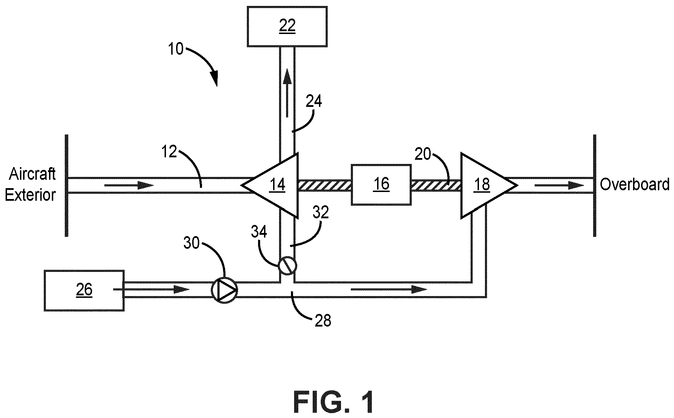

FIG. 1 schematically illustrates air supply system 10 for providing an aircraft air conditioning system, such as an environmental control system (ECS), with pressurized air. System 10 includes inlet pathway 12 fluidly connected to cabin air compressor 14 (hereinafter referred to as compressor 14) for delivering outside air (e.g., as ambient air or ram air depending on the motion of the aircraft) from the aircraft exterior to compressor 14. Compressor 14 is operatively coupled to motor 16 and turbine 18 via shaft 20. Compressor 14 can be powered by motor 16 and/or turbine 18, depending on the operating mode, to pressurize/compress received outside air. The pressurized air can be provided to ECS pack 22 via fluid pathway 24. ECS pack 22 can be fluidly connected to aircraft cabin 26 to provide conditioned air to cabin 26. Cabin 26 is fluidly connected to turbine 18 via outflow pathway 28 such that cabin outflow air can be provided to turbine 18. Turbine 18 captures energy from cabin outflow air (i.e., by expanding the cabin outflow air) to drive compressor 14, which reduces the need for aircraft energy to power compressor 14. Cabin outflow air expanded/depressurized by turbine 18 can be dumped overboard, or reused as is discussed in greater detail below. Check valve 30 prevents backflow into cabin 26 under some operating conditions, as is discussed in greater detail below.

System 10 can further include surge relief pathway 32, directly fluidly connecting compressor 14 to outflow pathway 28 and subsequently, turbine 18. Surge relief valve 34 can be disposed within surge relief pathway 32 and is operable to prevent or allow surge relief air from compressor 14 into outflow pathway 28. In a first state during ground and/or low altitude operations, the pressure differential between cabin 26 and turbine 18 (i.e., along outflow pathway 28) is low or non-existent, and compressor 14 generates more pressurized air than needed by system 10. In the first state, surge relief valve 34 can be opened (i.e., at least partially) to allow excess compressor 14 airflow (i.e., surge relief air) to flow along surge relief pathway 32 from compressor 14 to outflow pathway 28. In this way, surge relief valve 34 controls the surge margin to prevent surging of compressor 14. Check valve 30 can be closed when surge relief valve 34 is open to prevent surge relief air from entering cabin 26. In conventional systems, the excess/surge relief air is exhausted from the system or otherwise unused. As such, system 10 expends energy to compress an amount of air, via compressor 14, that is not subsequently used by ECS pack 22 or elsewhere within the aircraft. However, in system 10, surge relief air can be provided to turbine 18, which in the first state may not be receiving cabin outflow air. Thus, system 10 both effectively controls compressor 14 surge and simultaneously recovers energy by driving turbine 18 and compressor 14, further reducing external energy needs of system 10.

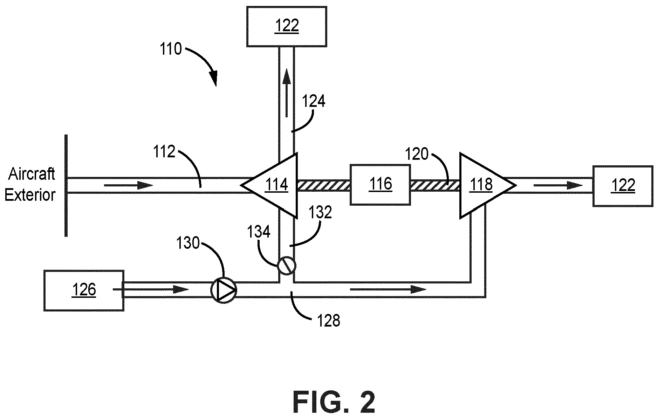

FIG. 2 schematically illustrates air supply system 110 which is substantially similar to air supply system 10, having inlet pathway 112, compressor 114, motor 116, turbine 118, shaft 120, fluid pathway 124, outflow pathway 128, check valve 130, surge relief pathway 132, and surge relief valve 134. The primary difference between systems 110 and 10 is that in system 110, instead of dumping airflow coming off of turbine 118 overboard, outflow pathway 128 is fluidly connected to ECS pack 122 such that the relatively cool airflow coming off turbine 118 can act as a heat sink for fluids circulating through ECS pack 122, or more generally, any system and/or component within the aircraft that requires cooling airflow (e.g., hydraulics, motors, avionics, etc.) for cooling another relatively hotter medium. More specifically, in a second state during high altitude (i.e., cruise) operations, a pressure differential along outflow pathway 128 drives cabin outflow air from cabin 126 to turbine 118. Turbine 118 extracts energy from the cabin outflow air which is used to drive compressor 114. The cooled cabin outflow air exhausted from turbine 118 can then be routed through ECS pack 122 and placed in thermal communication with another, relatively hotter fluid flowing through ECS pack 122 to cool the fluid. Thus, in addition to further energy recovery in the first state, as described above, system 110 also utilizes an airflow that would otherwise be dumped overboard to cool ECS fluid, reducing the need for an external cooling air source and thereby, drag on the aircraft. It should be mentioned that system 110 can also operate to cool ECS fluid in this manner in the first state, where surge relief air is flowing through outflow pathway 128 and turbine 118. Although ECS pack 122 is depicted for simplicity of illustration in multiple locations in FIG. 2, system 110 can include a single ECS pack 122, connected both to fluid pathway 124 and outflow pathway 128 (i.e., fluidly downstream from turbine 118). A person skilled in the art will understand, however, that in some embodiments system 110 can include multiple separate ECS packs 122.

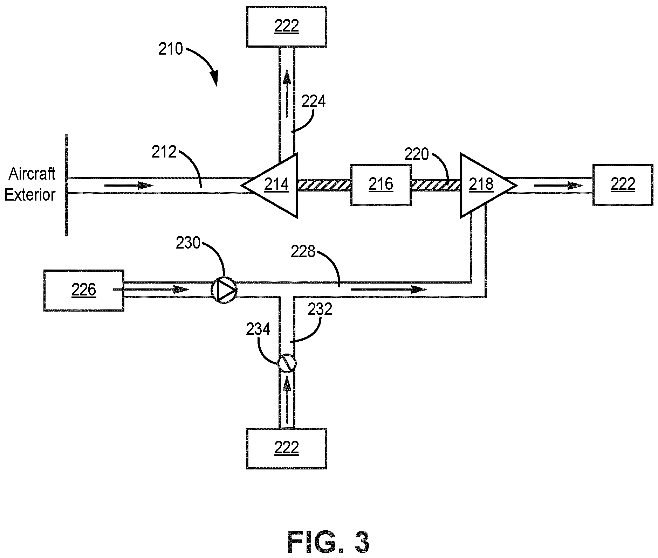

FIG. 3 schematically illustrates air supply system 210 which is substantially similar to air supply systems 10 and 110, having inlet pathway 212, compressor 214, motor 216, turbine 218, shaft 220, fluid pathway 224, outflow pathway 228 check valve 230, surge relief pathway 232, and surge relief valve 234. Cabin outflow air from cabin 226 can be used to cool fluid within ECS pack 222 similar to system 110. The primary difference between system 210 and either of systems 10 or 110 is that surge relief pathway 232 is downstream of at least one component of ECS pack 222, such as the primary heat exchanger (not shown). As such, surge relief pathway 232 indirectly fluidly connects compressor 214 to outflow pathway 228. With this arrangement, surge relief air evacuated downstream of the primary heat exchanger can be slightly cooler than surge relief air evacuated from compressor 214, thus subsequently traversing turbine 218 can create even cooler airflow for use as a heat sink in ECS pack 222 (or another aircraft system or component) than, for example, the embodiment of FIG. 2.

Although ECS pack 222 is depicted for simplicity of illustration in multiple locations in FIG. 3, system 210 can include a single ECS pack 222, connected both to fluid pathway 224 and outflow pathway 228 (i.e., fluidly downstream from turbine 218). A person skilled in the art will understand, however, that in some embodiments system 210 can include multiple separate ECS packs 222.

### Discussion of Possible Embodiments

The following are non-exclusive descriptions of possible embodiments of the present invention.

An aircraft air supply system for generating pressurized air includes a compressor configured to receive and pressurize a flow of outside air, a turbine operatively coupled to the compressor by a shaft and configured to drive the compressor, a fluid pathway fluidly connecting the compressor to an environmental control system pack, an outflow pathway fluidly connecting a cabin of the aircraft to the turbine, a surge relief pathway fluidly connecting the compressor to the outflow pathway and the turbine, and a surge relief valve disposed within the surge relief pathway. In a first operational state, the surge relief valve is open to allow a flow of surge relief air to flow from the compressor to the outflow pathway via the surge relief pathway, the surge relief air further flowing through the turbine.

The system of the preceding paragraph can optionally include, additionally and/or alternatively, any one or more of the following features, configurations and/or additional components:

The above system can further include a check valve disposed within the outflow pathway downstream of the cabin, the check valve operable to prevent a backflow of surge relief air into the cabin during the first operational state.

Any of the above systems can further include a motor mounted on the shaft and configured to drive the compressor.

Any of the above systems can further include an inlet pathway fluidly connecting the compressor to a source of the outside air.

In any of the above systems, the outflow pathway can fluidly connect the cabin and the turbine to an aircraft system.

In any of the above systems, in a second operation state, the turbine can receive and expand the cabin outflow air, cooling the cabin outflow air, and the cooled cabin outflow air can be provided to the aircraft system via the outflow pathway.

In any of the above systems, within the aircraft system, the cooled cabin outflow air can be placed in thermal exchange relationship with a relatively hotter medium to cool the relatively hotter medium.

In any of the above systems, the surge relief pathway can be disposed downstream of a heat exchanger of the environmental control system pack to indirectly fluidly connect the compressor to the outflow pathway.

In any of the above systems, in the first operational state, the turbine can receive and expand the surge relief air, cooling the surge relief air, and the cooled surge relief air can be provided to the environmental control system pack via the outflow pathway.

In any of the above systems, the surge relief pathway can directly fluidly connect the compressor to the outflow pathway.

In any of the above systems, the outside air can be one of ambient air and ram air.

A method of operating an aircraft air supply system in a first operating mode includes pressurizing, using a compressor, a flow of outside air, evacuating an amount of the pressurized air from the compressor as surge relief air via a surge relief pathway to prevent surging of the compressor, the surge relief pathway fluidly connected to an outflow pathway and a turbine of the air supply system, depressurizing, using the turbine, the surge relief air, and powering, using the turbine, the compressor using energy recovered from depressurizing the surge relief air.

The method of the preceding paragraph can optionally include, additionally and/or alternatively, any one or more of the following features, configurations and/or additional steps:

In the above method, evacuating the amount of the pressurized air from the compressor can include opening a surge relief valve disposed within the surge relief pathway to permit the surge relief air to flow therethrough.

Any of the above methods can further include closing a check valve disposed downstream of a cabin of the aircraft within the outflow pathway to prevent backflow of surge relief air into the cabin.

Any of the above methods can further include providing the amount of pressurized air to a heat exchanger of an environmental control system pack prior to evacuating the amount of the pressurized air from the compressor.

In any of the above methods, the step of depressurizing the surge relief air can cool the surge relief air.

Any of the above methods can further include placing the cooled surge relief air in thermal communication with a relatively hotter medium of an aircraft system to cool the relatively hotter medium.

In any of the above methods, the first operational mode can be a low altitude or ground operational mode.

A method of operating an aircraft air supply system in a second operating mode includes providing outflow air from a cabin of the aircraft to a turbine, depressurizing, using the turbine, the outflow air to cool the outflow air, and placing the cooled outflow air in thermal communication with a relatively hotter medium of an aircraft system to cool the relatively hotter medium.

The method of the preceding paragraph can optionally include, additionally and/or alternatively, any one or more of the following features, configurations and/or additional steps:

In the above method, the second operational mode can be a cruise operational mode.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An aircraft air supply system for generating pressurized air, the air supply system comprising:
a compressor (114, 214) configured to receive and pressurize a flow of outside air;
a turbine (118, 218) operatively coupled to the compressor (114, 214) by a shaft and configured to drive the compressor (114, 214);
a fluid pathway (114, 224) fluidly connecting the compressor (114, 214) to an environmental control system pack;
an outflow pathway fluidly connecting a cabin of the aircraft to the turbine (118, 218);
a surge relief pathway fluidly connecting the compressor (114, 214) to the outflow pathway and the turbine (118, 218); and
a surge relief valve (134, 234) disposed within the surge relief pathway,
wherein in a first operational state, the surge relief valve is open to allow a flow of surge relief air to flow from the compressor (114, 214) to the outflow pathway via the surge relief pathway (134, 234), the surge relief air further flowing through the turbine (118, 218).

2. The system of claim 1 and further comprising: a check valve disposed within the outflow pathway downstream of the cabin, the check valve operable to prevent a backflow of surge relief air into the cabin during the first operational state.

3. The system of claim 1 or 2, and further comprising: a motor mounted on the shaft and configured to drive the compressor (114, 214), and/or further comprising: an inlet pathway fluidly connecting the compressor (114, 214) to a source of the outside air.

4. The system of any preceding claim, wherein the outflow pathway fluidly connects the cabin and the turbine (118, 218) to an aircraft system.

5. The system of claim 4, wherein in a second operation state, the turbine (118, 218) receives and expands the cabin outflow air, cooling the cabin outflow air, and wherein the cooled cabin outflow air is provided to the aircraft system via the outflow pathway.

6. The system of claim 5, wherein within the aircraft system, the cooled cabin outflow air is placed in thermal exchange relationship with a relatively hotter medium to cool the relatively hotter medium, and optionally wherein the surge relief pathway is disposed downstream of a heat exchanger of the environmental control system pack to indirectly fluidly connect the compressor (114, 214) to the outflow pathway.

7. The system of claim 4, wherein in the first operational state, the turbine (118, 218) receives and expands the surge relief air, cooling the surge relief air, and wherein the cooled surge relief air is provided to the environmental control system pack via the outflow pathway.

8. The system of any preceding claim, wherein the surge relief pathway directly fluidly connects the compressor (114, 214) to the outflow pathway, and/or wherein the outside air is one of ambient air and ram air.

9. A method of operating an aircraft air supply system in a first operating mode, the method comprising:
pressurizing, using a compressor (114, 214), a flow of outside air;
evacuating an amount of the pressurized air from the compressor (114, 214) as surge relief air via a surge relief pathway to prevent surging of the compressor (114, 214), the surge relief pathway fluidly connected to an outflow pathway and a turbine (118, 218) of the air supply system;
depressurizing, using the turbine (118, 218), the surge relief air; and
powering, using the turbine (118, 218), the compressor (114, 214) using energy recovered from depressurizing the surge relief air.

10. The method of claim 9, wherein evacuating the amount of the pressurized air from the compressor (114, 214) comprises: opening a surge relief valve disposed within the surge relief pathway to permit the surge relief air to flow therethrough.

11. The method of claim 10 and further comprising: closing a check valve disposed downstream of a cabin of the aircraft within the outflow pathway to prevent backflow of surge relief air into the cabin, and/or and further comprising: providing the amount of pressurized air to a heat exchanger of an environmental control system pack prior to evacuating the amount of the pressurized air from the compressor (114, 214).

12. The method of claim 9 or 10, wherein the step of depressurizing the surge relief air cools the surge relief air, and optionally further comprising: placing the cooled surge relief air in thermal communication with a relatively hotter medium of an aircraft system to cool the relatively hotter medium.

13. The method of any of claims 9 to 12, wherein the first operational mode is a low altitude or ground operational mode.

14. A method of operating an aircraft air supply system in a second operating mode, the method comprising:
providing outflow air from a cabin of the aircraft to a turbine (118, 218);
depressurizing, using the turbine (118, 218), the outflow air to cool the outflow air; and
placing the cooled outflow air in thermal communication with a relatively hotter medium of an aircraft system to cool the relatively hotter medium.

15. The method of claim 14, wherein the second operational mode is a cruise operational mode.
